# EUROPÄISCHE PATENTSCHRIFT

(11) **EP 0 901 427 B1**
(45) Veröffentlichungstag und Bekanntmachung des Hinweises auf die Patenterteilung: **30.07.2003**
(21) Anmeldenummer: 97924918.2
(22) Anmeldetag: 28.05.1997
(51) Int. Cl.: B60P 1/02

(54) **LADERAUM EINES KRAFTFAHRZEUGES**
LOADING SPACE OF A MOTOR VEHICLE
COMPARTIMENT MARCHANDISES D'UN VEHICULE A MOTEUR

(30) Priorität: 31.05.1996 DE 29609539 U; 21.11.1996 DE 29620266 U
(43) Veröffentlichungstag der Anmeldung: 17.03.1999
(73) Patentinhaber: Marbach, Bernd, 74078 Heilbronn (DE)
(72) Erfinder: Marbach, Bernd, 74078 Heilbronn (DE)
(74) Vertreter: Müller, Hans, Dipl.-Ing.
(86) Internationale Anmeldenummer: DE9701073
(87) Internationale Veröffentlichungsnummer: WO97046418

(56) Entgegenhaltungen:
- EP-A- 0 611 245
- FR-A- 2 655 131
- FR-A- 2 679 194
- US-A- 3 288 314
- US-A- 3 786 951
- US-A- 4 919 582
- "DOPPEL DECKER TRANSPORTSYSTEME - INNOVATIVE TRANSPORTLÖSUNGEN FÜR EUROPA"; Doppeldecker Transportsysteme GmbH

## Beschreibung

### TECHNISCHES GEBIET

Die Erfindung betrifft einen Laderaum eines Fahrzeuges mit einem im Inneren des Laderaumes vorhandenen Zwischenboden und mit einem unteren Ladeboden, der zwischen seitlichen Radkästen vorhanden ist. Ein solches Fahrzeug kann beispielsweise auf einem Beladeplatz vor einer Beladerampe zum Be- beziehungsweise Entladen bereitgestellt werden.

### STAND DER TECHNIK

Es sind Sattelauflieger bekannt, die mit einem Zwischenboden ausgestattet sind. Sowohl auf dem Zwischenboden als auch auf dem unteren Ladeboden des Sattelaufliegers kann Verpackungsgut aufgelagert werden. Dies Verpackungsgut kann beispielsweise auf gleichartig ausgebildeten sogenannten Rollcontainern vorhanden sein. Die Rollcontainer können über eine am Heck des Sattelaufliegers vorhandene Ladebühne von einer Rampe aus in den Sattelauflieger hinein- beziehungsweise herausgeschoben werden. Aufgrund der Größenabmessungen des Sattelaufliegers und der daraus resultierenden Höhe des Zwischenbodens ist im beladenen Zustand der Zwischenboden regelmäßig nicht in gleicher Höhe wie die Beladerampe vorhanden. Zum Be- beziehungsweise Entladen werden daher die Rollcontainer auf die Laderampe geschoben, und die Laderampe in vertikaler Richtung verfahren, bis sie beim Entladevorgang in die Höhe der Beladerampe beziehungsweise beim Beladevorgang in die Höhe entweder des unteren Ladebodens oder des Zwischenboden gelangt ist. Da jeweils nur maximal zwei oder drei Rollcontainer auf der Laderampe gleichzeitig Platz finden, muß die Laderampe zum vollständigen Bebeziehungsweise Entladen des beispielsweise Sattelaufliegers sehr oft nach oben beziehungsweise unten verfahren werden. Der zeitliche Aufwand zum Be- beziehungsweise Entladen eines Sattelaufliegers ist daher recht groß.

Um während des Belade- beziehungsweise Entladevorganges die Zugmaschine eines Sattelaufliegers anderweitig verwenden zu können und um einen Sattelauflieger selbständig auf seinem Beladeplatz bereitstellen zu können, kann er in seinem vorderen, sogenannten Trailerhalsbereich seitlich angeordnete Stempel besitzen, die gegen die Oberfläche des Beladeplatzes ausgefahren werden können. Der Sattelauflieger kann dadurch standsicher auf dem Beladeplatz bereitgestellt werden.

Bei einem anderen bekannten Sattelauflieger ist dessen unterer Ladeboden zwischen seitlichen Radkästen vorhanden. Der Ladeboden ist dadurch sehr tief vorhanden, was sein Be- und Entladen vom Beladeplatz aus günstig beeinflußt. Bei diesem luftgefederten Sattelauflieger kann durch Einwirken auf die Stärke der Luftfederung der untere Ladeboden geringfügig in der Höhe verstellt werden.

Aus der EP-A-0 611 245 ist ein Sattelauflieger mit einem gattungsgemäßen Laderaum der eingangs genannten Art bekannt, bei dem sein unterer Ladeboden relativ zu seinem gesamten Laderaum höhenmäßig verstellt werden kann. Es läßt sich der Sattelauflieger allerdings nicht insgesamt anheben oder absenken. Im voll beladenen Zustand kann das auf dem unteren Laderaum und dem zwischenboden vorhandene Ladegut, das in diesem Fall aus Rollcontainer besteht, den gesamten Laderaum der Höhe nach praktisch vollständig ausfüllen, so dass der untere Ladeboden nur bei nicht beladenem, hochgehobenem Zwischenboden be- oder entladen werden kann; das auf dem Zwischenboden gelagerte Ladegut würde bei hochgehobenem Zwischenboden nämlich mit der Decke des Laderaumes kollidieren.

### DARSTELLUNG DER ERFINDUNG

Ausgehend von diesem Stand der Technik liegt der Erfindung die Aufgabe zugrunde, einen Laderaum der eingangs genannten Art anzugeben, der sich wirtschaftlich möglichst günstig verwenden und damit auch einfach be- beziehungsweise entladen läßt.

Diese Erfindung ist durch die Merkmale des kennzeichens von Anspruch 1 gegeben. Ausgehend von dem im Stand der Technik gattungsmäßig bekannten Laderaum insbesondere in Form eines Sattelaufliegers zeichnet sich die Erfindung ferner durch eine Hubvorrichtung für den Laderaum aus zum Anheben und Absenken desselben. Dadurch ist es möglich, den unteren Ladeboden in die Höhe einer Laderampe zu bringen. Bei heute vorhandenen Laderampenhöhen setzt dies ein Anheben des Laderaumes wie beispielsweise des Sattelaufliegers von gut einem Meter voraus. Der Laderaum kann dabei der gesamte Sattelauflieger oder nur ein beispielsweise auf dem Chassis des Sattelaufliegers angeordneter separater Laderaum sein. Das erfindungsgemäß mögliche Anheben und Absenken des gesamten Laderaumes macht eine Heck-Hubbühne überflüssig, im Gegensatz zum Stand der Technik, wo nur mit Hilfe einer am Heck des Fahrzeuges vertikal verfahrbaren Hubbühne der untere Ladeboden be- bzw. entladen werden kann.

Zum Anheben des Fahrzeuges hat es sich als vorteilhaft herausgestellt, im vorderen und hinteren Bereich des insbesondere als Sattelauflieger ausgebildeten Laderaumes jeweils zwei Stempel anzuordnen. Die vorderen Stempel können vorzugsweise im Bereich des Trailerhalses des Sattelaufliegers und die hinteren Stempel in den beiden seitlichen Radkästen des Sattelaufliegers vorzugsweise angeordnet sein.

Statt unmittelbar gegen den Beladeplatz können Stempel oder vergleichbare Hubvorrichtungen sich auch gegen die Radachsen-Baugruppen abstützen und sich damit nur mittelbar auf dem Beladeplatz abstützen.

Um den regelmäßig zwischen dem Heck des zu beladenden Laderaumes und der Beladerampe vorhandenen Freiraum überbrücken zu können, ist vorzugsweise sowohl am unteren Ladeboden als auch an dem Zwischenboden jeweils eine Schwenkbühne befestigt, die in etwa horizontale Ausrichtung, also in den unteren Ladeboden beziehungsweise den Zwischenboden nach hinten verlängernde Ausrichtung, gebracht werden kann.

Die untere Schwenkbühne kann in ihrer horizontalen Ausrichtung am oberhalb vorhandenen Zwischenboden angehängt und dadurch in ihrer Position gehalten werden. Um einen konstruktiv leichten Aufbau des beispielsweise Sattelaufliegers zu ermöglichen, was beispielsweise eine leichte Seitenwandund Dachkonstruktion des Sattelaufliegers oberhalb des Zwischenbodens beinhaltet, wird die am Zwischenboden vorhandene Schwenkbühne gemäß einer bevorzugten Ausführungsform nicht nach oben abgehängt, sondern nach unten abgestützt. Diese untere Abstützung kann vorzugsweise durch die untere, entsprechend nach oben ausgerichtete untere Schwenkbühne verwirklicht werden.

Beide Schwenkbühnen können vorteilhafterweise nach oben verschwenkt werden, so daß sie in ihrer jeweiligen hochgeklappten Stellung den jeweiligen Teilladeraum auf dem unteren Ladeboden beziehungsweise auf dem Zwischenboden nach hinten absichern können.

Sofern der obere Bereich des Laderaumes verwindungsweich ausgebildet wird, also nicht zur Steifigkeit des beispielsweise Sattelaufliegers beitragen muß, kann durch Wegnehmen der beispielsweise Planen-Konstruktion der Laderaum auch von oben her auf den beispielsweise voll abgesenkten Zwischenboden beladen werden.

Sowohl die Stempel als auch der Zwischenboden können hydraulisch, pneumatisch oder mittels motorisch- oder handbetätigbaren Spindelantrieb verstellbar sein.

Um weitestgehend flexibel in der Art der Beladung sein zu können, ist der Zwischenboden in einer speziellen Ausführungsform der Erfindung höhenverstellbar ausgebildet.

Die Höhenverstellbarkeit des Zwischenbodens kann so weit gehen, daß der Zwischenboden auch bis zum unteren Ladeboden hin abgesenkt werden kann. Dazu weist der Zwischenboden gegebenenfalls seitliche Aussparungen auf, um beim Absenken nicht mit seitlich vorhandenen Radkästen in Kollision zu gelangen. Ein derart extrem weit abgesenkter Zwischenboden ermöglicht das Beladen mit raumhohen Ladegütern vom "Boden" aus.

Weitere Merkmale und Vorteile der Erfindung sind den in den Ansprüchen ferner aufgeführten Merkmalen sowie dem nachstehenden Ausführungsbeispiel zu entnehmen.

### KURZE BESCHREIBUNG DER ZEICHNUNG

Die Erfindung wird im folgenden anhand des in der Zeichnung dargestellten Ausführungsbeispieles näher beschrieben und erläutert. Es zeigen:
- Fig. 1: eine schematisierte Seitenansicht eines an eine Beladerampe von einer Zugmaschine rückwärts herangefahrenen Sattelaufliegers nach der Erfindung,
- Fig. 2: den Sattelauflieger gemäß Figur 1 in derart angehobener Stellung, daß sein unterer Ladeboden von einer Rampe aus entladen werden kann,
- Fig. 3: den Sattelauflieger gemäß Fig. 2 in einer abgesenkten Stellung, in der anschließend der Zwischenboden von einer Rampe aus entladen werden kann,
- Fig. 4: eine schematisierte seitliche Rückansicht des Sattelaufliegers gemäß Figur 1 mit seinen beiden Schwenkbühnen,
- Fig. 5: eine Draufsicht auf den ganz auf den unteren Ladeboden abgesenkten Zwischenboden und
- Fig. 6: eine Teilansicht des Zwischenbodens mit seine seitlichen Aussparungen verschließenden Bodenteilen.

### WEGE ZUM AUSFÜHREN DER ERFINDUNG

Ein Sattelauflieger 10 stützt sich mit seinem Trailerhals 12 auf einer Zugmaschine 14 ab. Durch diese Zugmaschine 14 ist der Sattelauflieger 10 mit seinem Heck 18 an eine Beladerampe 16 hinmanövriert worden.

Der Sattelauflieger 10 ist im vorliegenden Fall ein Drei-Achser und steht mit seinen Rädern 20 auf der Oberfläche 22 des vor der Laderampe 16 befindlichen Beladeplatzes 24 auf. Auch die Zugmaschine 14 steht auf dieser Oberfläche 22.

Der Sattelauflieger 10 besitzt einen höhenverstellbaren Zwischenboden 26, der sich vom Heck 18 bis zum Trailerhals 12 erstreckt. Durch den Zwischenboden 26 wird ein oberer Teilbeladeraum 28 und ein unterer Teilbeladeraum 30 zwischen dem Trailerhals 12 und dem Heck 18 geschaffen. Im Bereich des Trailerhalses 12 ist nur ein einziger Teilbeladeraum 32 vorhanden.

Der Sattelauflieger 10 ist mit Rollcontainern 36 beladen. Diese Rollcontainer besitzen jeweils vier Räder 38, so daß sie leicht hin- und hergeschoben werden können. Die Rollcontainer sind im vorliegenden Beispielsfall alle gleich ausgebildet und können mit den unterschiedlichsten Waren beladen sein.

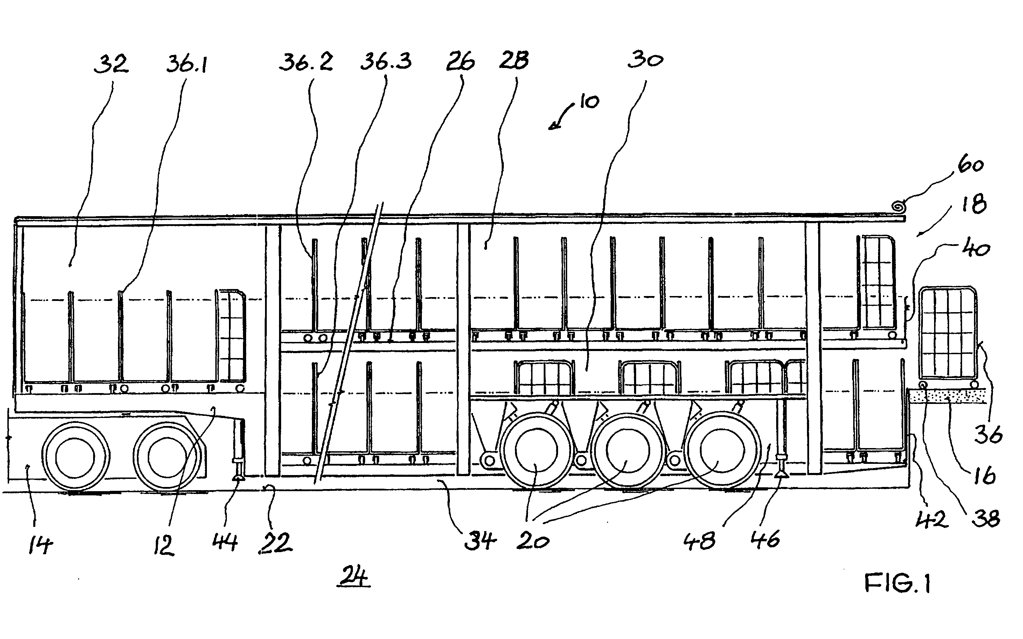

Im vollbeladenen Zustand des Sattelaufliegers 10, der in Fig. 1 dargestellt ist, befinden sich Rollcontainer 36 in ihrer Position 36.1 im Bereich des Trailerhalses 12 auf dem dort vorhandenen Ladeboden 32. Rollcontainer 36 befinden sich außerdem in ihrer Position 36.2 auf dem Zwischenboden 26 und damit im oberen Teilbeladeraum 28. Außerdem befinden sich Rollcontainer 36 in ihrer Position 36.3 auf dem unteren Ladeboden 34, der unterhalb des Zwischenbodens 26 vorhanden ist. Diese Rollcontainer 36.3 füllen damit den unteren Teilbeladeraum 30 aus.

Im allgemeinen sind Beladerampen 16 höhenmäßig so konstruiert, daß sie sich etwa in der Höhe des Ladebodens 32 vom Trailerhals 12 befinden. Bei dieser in Fig. 1 dargestellten Position ist der untere Ladeboden 34 etwa 110 cm tiefer als die Beladerampe 16 und der Zwischenboden 26 etwa 70 cm oberhalb der Beladerampe 16 vorhanden.

Am Heck 18 des Sattelaufliegers 10 ist am Zwischenboden 26 eine obere Schwenkbühne 40 angelenkt,die in ihrer nach oben geklappten Stellung dargestellt ist. In dieser Stellung sichert sie den oberen Teilbeladeraum 28 nach hinten ab.

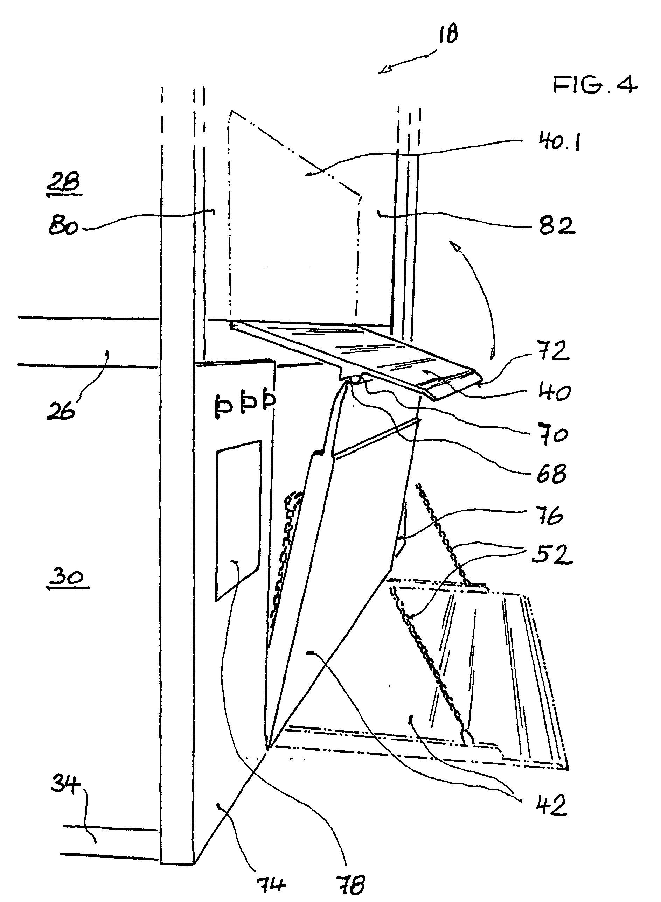

An dem unteren Ladeboden 34 ist im Bereich des Heckes 18 eine untere Schwenkbühne 42 angelenkt, die ebenfalls in ihrer nach oben geschwenkten Ausrichtung erkennbar ist. Durch sie 42 kann der untere Teilbeladeraum 28 nach hinten gesichert werden. Näheres zu diesen beiden Schwenkbühnen 40, 42 wird im Zusammenhang mit der Figur 4 weiter unten noch beschrieben.

Im rückwärtigen Bereich des Trailerhalses 12 ist jeweils seitlich ein Hydraulik-Stempel 44 vorhanden. Darüber hinaus ist im hinteren Bereich des rechten und linken, seitlichen Radkastens 48 des Sattelaufliegers 10 jeweils ein weiterer Hydraulik-Stempel 46 vorhanden. Der Sattelauflieger 10 besitzt damit zwei Hydraulik-Stempel 44 in seinem vorderen Bereich und zwei Hydraulik-Stempel 46 in seinem hinteren Bereich. Die Hydraulik-Stempel 44, 46 sind entsprechend ihrer Bezeichnung hydraulisch verstellbar.

Zum Entladen des Sattelaufliegers 10 werden die vier Hydraulik-Stempel 44, 46 gegen die Oberfläche 22 des Beladeplatzes 24 ausgefahren. Dadurch kann die Zugmaschine 14 vom Sattelauflieger 10 wegbewegt werden. Anschließend werden die Hydraulik-Stempel 44, 46 soweit weiter ausgefahren, daß der untere Beladeboden 34 in die Höhe der Beladerampe 16 gelangt. Im allgemeinen wird sich der Sattelauflieger 10 nicht so dicht an der Laderampe 16 befinden, wie dies in Fig. 1 dargestellt ist.

Um den Freiraum 50 zwischen dem Heck 18 des Sattelaufliegers 10 und der Beladerampe 16 zu überbrücken, wird die untere Schwenkbühne 42 horizontal nach hinten vom unteren Beladeboden 34 weggeschwenkt. Die Schwenkbühne 42, die über seitliche Ketten 52 am Zwischenboden 26 anhängt, liegt mit ihrem vorderen Bereich auf der Beladerampe 16 auf. Von dem unteren Beladeboden 34 können dann die dort vorhandenen Rollcontainer 36.3 rückwärts aus dem Sattelauflieger 10 nacheinander heraustransportiert werden.

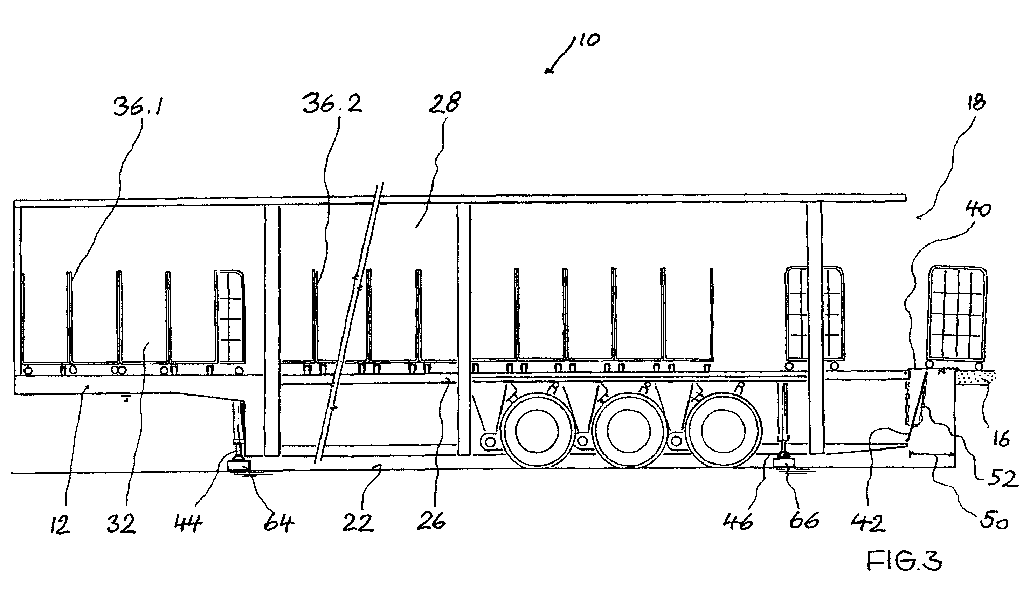

Die auf dem Ladeboden 32 des Trailerhalses 12 befindlichen Rollcontainer 36.1 und die auf dem Zwischenboden 26 befindlichen Rollcontainer 36.2 können in dieser Position des Sattelaufliegers 10 nicht entladen werden. Um auch diese Container 36.1 und 36.2 zu entladen, wird nach vollständiger Entladung der Rollcontainer 36.3 der Sattelauflieger 10 in seine in Fig. 3 dargestellte tiefe Position abgesenkt. Dazu werden die Hydraulik-Stempel 44, 46 entsprechend weit eingefahren.

Nach dem Absenken des Sattelaufliegers 10 in seine in Fig. 3 dargestellte Position wird der Zwischenboden 26 abgesenkt. Der Zwischenboden gelangt dann höhenmäßig in die Höhe des Ladebodens 32 vom Trailerhals 12 und außerdem in höhenmäßige Ausrichtung mit der Beladerampe 16. Um den Freiraum 50 zwischen dem Heck 18 und der Beladerampe 16 zu überbrücken, wird die am Zwischenboden 26 vorhandene obere Schwenkbühne 40 in ihre etwa horizontale Lage nach unten verschwenkt. Diese obere Schwenkbühne 40 liegt dann entweder auf der Beladerampe 16 auf oder stützt sich auf der unteren Schwenkbühne 42 ab, was näher in Fig. 4 dargestellt ist. In jedem Fall können die Rollcontainer 36.2 vom Zwischenboden 26 und die Rollcontainer 36.1 aus dem Bereich des Trailerhalses 12 rückwärts nacheinander aus dem Sattelauflieger 10 herausgeschoben werden.

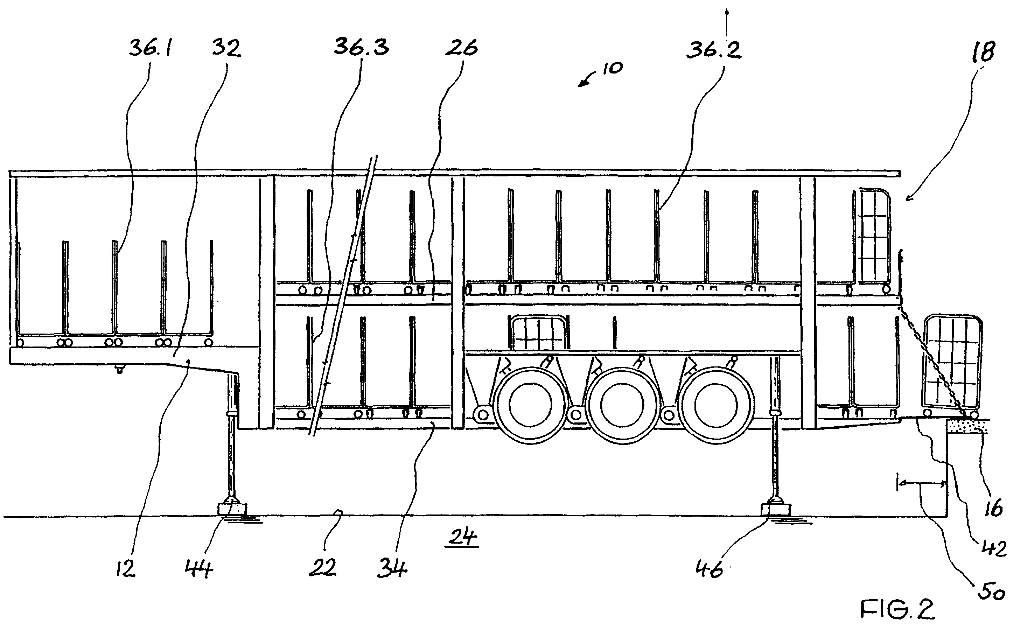

Das Beladen des Sattelaufliegers 10 erfolgt in umgekehrter Weise. Zunächst werden Rollcontainer in der in Fig. 3 dargestellten Position des Sattelaufliegers 10 in den Bereich des Trailerhalses 12 und den Bereich des Zwischenbodens 26 eingelagert. In dem Sattelauflieger 10 sind dann Rollcontainer 36.1 auf dem Ladeboden 32 und Rollcontainer 36.2 auf dem Zwischenboden 26 vorhanden. Anschließend wird dann der Sattelauflieger 10 in seine in Fig. 2 dargestellte Position gebracht. Nach Anheben des Zwischenbodens 26, wie in Fig. 2 dargestellt ist, können Rollcontainer 36.3 auf den unteren Ladeboden 34 von der Laderampe 16 aus eingelagert werden.

Der Be- beziehungsweise Entladevorgang erfordert also kein oftmaliges Hoch- und Runterfahren einer im Heck vorhandenen Laderampe, was bei der großen Anzahl der zu bewegenden Rollcontainern sehr zeitaufwendig ist. Durch die erfindungsgemäße Möglichkeit, den gesamten Sattelauflieger 10 anheben zu können, wird der gesamte Ent- beziehungsweise Beladevorgang zeitlich wesentlich verkürzt. Der sich daraus ergebende wirtschaftliche Vorteil ist ganz erheblich.

Zum Transportieren von sehr hohen Teilen kann im vorliegenden Beispielsfall der Zwischenboden 26 auch vollständig abgesenkt, d. h. auf den unteren Ladeboden 34 aufliegend positioniert werden.

Der Sattelauflieger 10 ist im vorliegenden Beispielsfall mit einer konstruktiv leichten Seitenwand und Dachkonstruktion ausgebildet. Über im Stand der Technik für sich genommen bekannte Quer- und Längsriegel ist eine Plane 60 gelegt. Eine derartige Konstruktion ermöglicht ein problemloses vollständiges Freilegen der Sattelauflieger-Konstruktionsteile oberhalb des unteren Ladebodens 34. Im vollständig abgesenkten Zustand des Zwischenbodens 26, wie vorstehend erwähnt ist, kann also beispielsweise von rückwärts auch ein Kranfahrzeug in den Sattelauflieger 10 hineinfahren und entsprechend große/schwere Ladegüter wie beispielsweise Maschinenteilen oder dergleichen bis in den Bereich des Trailerhalses 12 nach vorne hineintransportieren. Dies wird dadurch ermöglicht, daß der Sattelauflieger 10 lediglich bis in Höhe des Trailerhalses 12 und damit bis in Höhe der seitlichen Radkästen 48 biegesteif konstruiert ist. Die Nutzung diese Sattelaufliegers 10 ist dadurch nicht auf die in der Zeichnung dargestellte Verwendungsmöglichkeit zum Transportieren von Rollcontainern 36 beschränkt.

Um auch bei nachgiebigen Oberflächen 22 eine ausreichende feste Standfläche zu bekommen, sind unter den HydraulikStempeln 44, 46 Bodenplatten 64, 66 positioniert. Durch diese Bodenplatten 64, 66 können gegebenenfalls auch Längsund Querneigungen der Oberfläche 22 ausgeglichen werden, so daß die Hydraulik-Stempel 44, 46 in gleicher Weise und gleichmäßig aus- und eingefahren werden können.

Am Zwischenboden 26 ist die obere Schwenkbühne 40 in eine hochgeklappte, etwa vertikale Stellung 40.1 und in eine nach hinten weggeklappte Stellung 40.2 verschwenkbar gelagert. In ihrer hochgeklappten Stellung 40.1 wird die Schwenkbühne 40 in nicht näher dargestellter Weise durch seitlich vorhandene Konstruktionsteile wie Konstruktionsstangen gehalten, so daß sie fest in ihrer hochgeklappten Stellung vorhanden sein kann und wirkungsvoll den oberen Teilbeladeraum 28 nach hinten absichern kann.

Am unteren Beladeboden 34 ist im Bereich des Heckes 18 die untere Schwenkbühne 42 angelenkt, die aus einer etwa vertikalen, hochgeklappten Stellung, die in Fig. 1 angedeutet ist, in eine vollständig weggeschwenkte Lage gebracht werden kann, die in Fig. 2 und darüber hinaus in Fig. 4 gestrichelt dargestellt ist.

Die untere Schwenkbühne 42 ist über seitliche Ketten 52 am Zwischenboden 26 angehängt. Dadurch braucht sie in ihrer weggeschwenkten (in Fig. 4 gestrichelt dargestellten) Lage nicht aufzuliegen.

Die untere Schwenkbühne 42 bildet in ihrer nicht vollständig hochgeschwenkten Stellung, die in Fig. 4 dargestellt ist, eine Abstützung für die obere Schwenkbühne 40. Dabei greift sie mit ihrem freien Stirnrand 68 in eine auf der Unterseite der Schwenkbühne 40 ausgeformte Nut 70. Die Schwenkbühne 40 stützt sich in weggeklappter Position dadurch auf der unteren Schwenkbühne 42 ab. Die Schwenkbühne 40 muß sich daher nicht auf eine Laderampe 16 abstützen, wie das in Fig. 3 dargestellt ist, sondern könnte auch beispielsweise geringfügig oberhalb oder geringfügig vor der Laderampe 16 mit ihrem freien Rand 72 positioniert sein. Dadurch können höhenmäßige Toleranzen hinsichtlich der Positionierung des Zwischenbodens an der vorhandenen Beladerampe 16 und auch hinsichtlich des Positionierens des Sattelaufliegers 10 an der Rampe 16 ausgeglichen werden.

Die untere Schwenkbühne 42 reicht in Querrichtung nicht über die Breite des Heckes 18. Seitlich sind feststehende Heckteile 74, 76 vorhanden, die zum Positionieren von Heckbeleuchtungen 78 dienen. Diese Heckteile 74 reichen nicht über die gesamte Höhe des Heckes 18. Oberhalb des Zwischenbodens 26 in seiner in Fig. 3 dargestellten Be- beziehungsweise Entladeposition sind vergleichbare Heckteile 74 nicht vorhanden. Nachdem die obere Schwenkbühne 40 etwa gleich breit wie die unter Schwenkbühne 42 ist, sind seitlich neben der Schwenkbühne nicht ausgefachte "Luft"-Bereiche 80, 82 vorhanden. Diese sind im Verhältnis zu den transportierten Rollcontainern sehr schmal und dadurch unbedenklich. Sollten andere Güter eingelagert werden, könnte der seitliche Raum neben der oberen Schwenkbühne 40 durch zusätzliche, feststehende offene oder geschlossene Elemente beispielsweise türartig "verschlossen" werden.

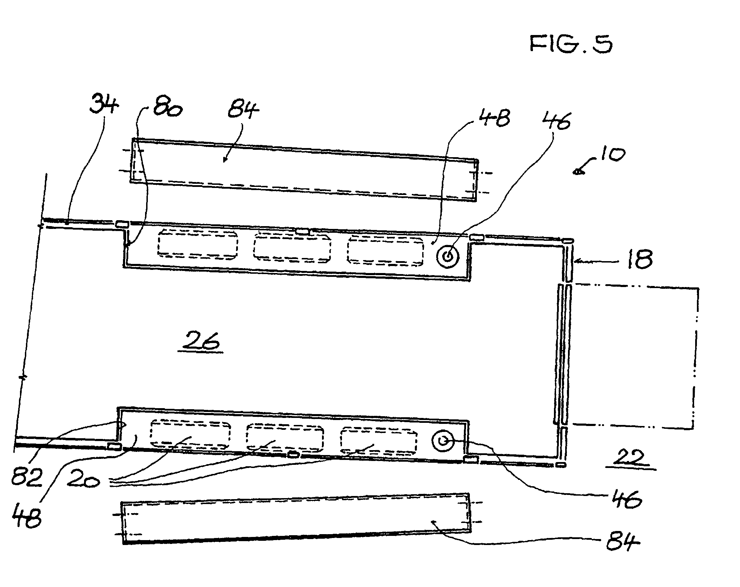

Aus der Draufsicht der Fig. 5 erkennt man den Zwischenboden 26, der im vorliegenden Beispielsfall voll auf den unteren Ladeboden 34 abgesenkt ist. Das Absenken des Zwischenbodens 26 ist dadurch möglich, daß derselbe seitlich jeweils eine Aussparung 80, 82 aufweist. Diese beiden Aussparungen 80, 82 sind jeweils so angeordnet und so groß, daß die seitlichen Radkästen 48 zwischen ihnen hindurchpassen. Beim Absenken des Zwischenbodens 26 auf den unteren Ladeboden 34 sind die Radkästen 48 dadurch nicht störend im Weg.

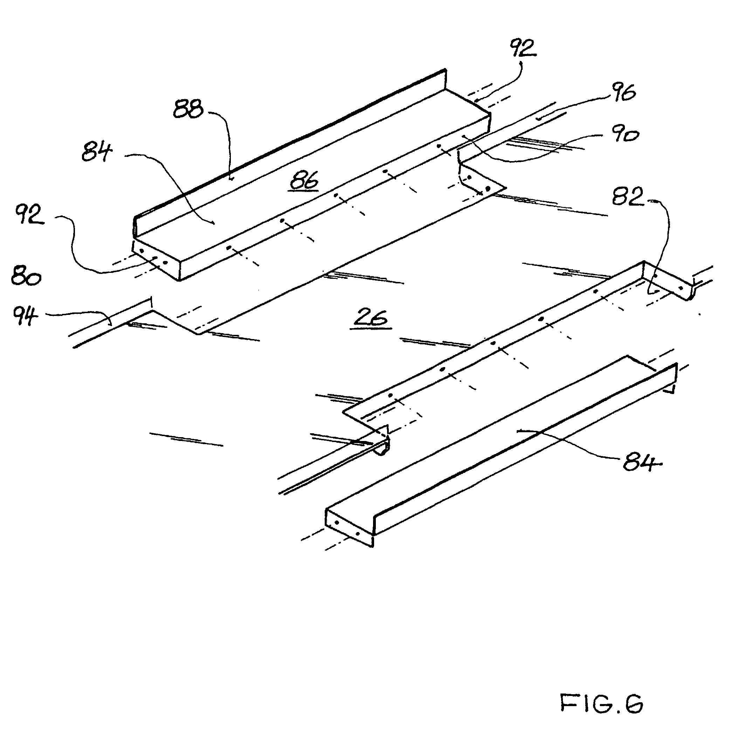

Die seitlichen Aussparungen 80, 82 können durch jeweils ein Bodenteil 84 verschlossen werden (Fig. 6). Das Verschließender Aussparungen 80, 82 ist nur dann möglich, wenn der Zwischenboden 26 sich oberhalb der beiden Radkästen 48 befindet.

Die Bodenteile 84 bestehen aus einer Platte 86. An der Außenseite dieser Platte ist eine rechtwinklige Abbiegung 88 nach oben hin und an dem gegenüberliegenden Längsrand eine rechtwinklige Abbiegung 90 nach unten vorhanden. Die obere Abbiegung 88 verhindert, daß Ladegut, wie beispielsweise Container 36 vom Zwischenboden seitlich herunterrollen können.

Die untere Abbiegung 90 kann an dem Zwischenboden 26 angeschraubt werden. In der Zeichnung sind mehrere Schraubachsen derartiger Verschraubungen symbolhaft dargestellt.

Zusätzlich sind an den beiden schmalen Seiten des Bodenteils 88 und damit an den beiden Schmalseiten der Platte 86 ebenfalls nach unten gerichtete stirnseitige Abbiegungen 92 vorhanden. Auch im Bereich dieser stirnseitigen Abbiegungen 92 kann das Bodenteil 84 an dem Zwischenboden 26 angeschraubt werden.

Die obere Abbiegung 88 findet im eingebauten Zustand ihre Verlängerung in Aufbiegungen 94, 96, die am Zwischenboden 26, außerhalb des Bereichs seiner Aussparungen 80, 82 vorhanden sind.

## Patentansprüche

1. Laderaum eines Fahrzeuges,
- mit einem im Inneren des Laderaumes (10) vorhandenen Zwischenboden (26),
- mit einem unteren Ladeboden (34), der zwischen seitlichen Radkästen (48) vorhanden ist,
**dadurch gekennzeichnet, daß**
- eine Hubvorrichtung (44, 46) für den Laderaum (10) zum Anhebben und Absenken desselben (10) vorhanden ist.

2. Laderaum nach Anspruch 1,
**dadurch gekennzeichnet, daß**
- der Laderaum (10) um etwa einen Meter anhebbar ist.

3. Laderaum nach Anspruch 1 oder 2,
**dadurch gekennzeichnet, daß**
- er als Sattelauflieger (10) ausgebildet oder Teil eines Sattelaufliegers ist.

4. Laderaum nach einem der vorstehenden Ansprüche,
**dadurch gekennzeichnet, daß**
- als Hubvorrichtung im vorderen und hinteren Bereich jeweils zwei Stempel (44) beziehungsweise (46) vorhanden sind.

5. Laderaum nach Anspruch 4,
**dadurch gekennzeichnet, daß**
- die Stempel (44, 46) gegen die Aufstandsfläche (24) des Kraftfahrzeuges ausfahrbar sind.

6. Laderaum nach Anspruch 4 oder 5,
**dadurch gekennzeichnet, daß**
- die vorderen Stempel (44) im Bereich des Trailerhalses (12) des Sattelaufliegers (10) und die hinteren Stempel (46) in den beiden seitlichen Radkästen (48) des Sattelaufliegers (10) vorhanden sind.

7. Laderaum nach einem der vorstehenden Ansprüche,
**dadurch gekennzeichnet, daß**
- eine untere Schwenkbühne (42) am unteren Ladeboden (34) befestigt ist, die in Verlängerung dieses unteren Ladebodens (34) bringbar ist,
- eine obere Schwenkbühne (40) am Zwischenboden (26) befestigt ist.

8. Laderaum nach Anspruch 7,
**dadurch gekennzeichnet, daß**
- die obere Schwenkbühne (40) in ihre den Zwischenboden (26) verlängernde Position bringbar ist, in welcher Position sie durch die untere Schwenkbühne (42) abstützbar haltbar ist.

9. Laderaum nach Anspruch 7 oder 8,
**dadurch gekennzeichnet, daß**
- beide Schwenkbühnen (40, 42) jeweils nach oben schwenkbar am unteren Ladeboden (34) beziehungsweise am Zwischenboden (26) befestigt sind,
- beide Schwenkbühnen (40, 42) in ihrer hochgeklappten Stellung den Teilbeladeraum (30) auf dem unteren Ladeboden (34) beziehungsweise den Teilbeladeraum (28) auf dem Zwischenboden (26) jeweils nach hinten sichern.

10. Laderaum nach einem der vorstehenden Ansprüche,
**dadurch gekennzeichnet, daß**
- er bis etwa in Höhe des Trailerhalses (12) tragfest und verwindungssteif ausgebildet ist und im Bereich oberhalb des Trailerhalses (12) mit einer nicht zur Steifigkeit des Sattelaufliegers (10) beitragenden Planen-Konstruktion versehen ist.

11. Laderaum nach einem der vorstehenden Ansprüche,
**dadurch gekennzeichnet, daß**
- die Stempel (44, 46) und/oder der Zwischenboden (26) hydraulisch, pneumatisch oder mittels motorisch- oder handbetätigbaren Spindelantrieb bewegbar sind.

12. Laderaum nach einem der vorstehenden Ansprüche,
**dadurch gekennzeichnet, daß**
- der zumindest eine Zwischenboden (26) höhenverstellbar ist.

13. Laderaum nach einem der vorstehenden Ansprüche,
**dadurch gekennzeichnet, daß**
- der Zwischenboden (26) seitliche Aussparungen besitzt, die in ihren Ausdehnungen der Größe der Radkästen (48) angepaßt sind, so daß
- der Zwischenboden (26) höhenverstellbar zumindest derart ist, daß er in den Ladebereich zwischen den Radkästen (48) absenkbar ist.

14. Laderaum nach Anspruch 13,
**dadurch gekennzeichnet, daß**
- der Zwischenboden (26) bis zum unteren Ladeboden (34) hin absenkbar ist.

15. Laderaum nach Anspruch 13 oder 14,
**dadurch gekennzeichnet, daß**
- die Aussparungen (80, 82) abdeckbar sind.

16. Laderaum nach Anspruch 14,
**dadurch gekennzeichnet, daß**
- die Aussparungen (80, 82) durch an den Zwischenboden (26) anschraubbare Bodenteile (84) verschließbar sind.

## Claims

1. Loading space of a motor vehicle,
- having a false floor (26) provided in the interior of the loading space (10),
- having a lower loading floor (34) which is provided between lateral wheel guards (48),
**characterized in that**
- a lifting device (44, 46) is provided for the loading space (10) for raising and lowering the same (10).

2. Loading space according to Claim 1, **characterized in that**
- the loading space (10) can be raised by approximately one metre.

3. Loading space according to Claim 1 or 2, **characterized in that**
- it is designed as a semitrailer (10) or is part of a semitrailer.

4. Loading space according to one of the preceding claims, **characterized in that**
- in each case two hydraulic supports (44 or 46) are provided as lifting device in the front and rear regions.

5. Loading space according to Claim 4, **characterized in that**
- the hydraulic supports (44, 46) can be extended onto the supporting surface (24) of the motor vehicle.

6. Loading space according to Claim 4 or 5, **characterized in that**
- the front hydraulic supports (44) are located in the region of the trailer neck (12) of the semitrailer (10) and the rear hydraulic supports (46) are located in the two lateral wheel guards (48) of the semitrailer (10).

7. Loading space according to one of the preceding claims, **characterized in that**
- a lower swinging platform (42) is attached to the lower loading floor (34), it being possible to move said swinging platform (42) into a position in which it is an extension of the lower loading floor (34),
- an upper swinging platform (40) is attached to the false floor (26).

8. Loading space according to Claim 7, **characterized in that**
- the upper swinging platform (40) can be moved into its position in which it extends the false floor (26), in which position it can be held in such a way that it can be supported by the lower swinging platform (42).

9. Loading space according to Claim 7 or 8, **characterized in that**
- the two swinging platforms (40, 42) are attached, each so as to be capable of swinging upwards, to the lower loading floor (34) or to the false floor (26),
- the two swinging platforms (40, 42), in their pivoted-up position, each secure towards the rear the partial loading space (30) on the lower loading floor (34) or the partial loading space (28) on the false floor (26).

10. Loading space according to one of the preceding claims, **characterized in that**
- it is of load-supporting and torsionally rigid design as far as approximately the level of the trailer neck (12), and is provided in the region above the trailer neck (12) with a tarpaulin structure which does not contribute to the rigidity of the semitrailer (10).

11. Loading space according to one of the preceding claims, **characterized in that** the hydraulic supports (44, 46) and/or the false floor (26) can be moved hydraulically, pneumatically or by means of a spindle drive which can be operated by motor or manually.

12. Loading space according to one of the preceding claims, **characterized in that**
- the at least one false floor (26) is vertically adjustable.

13. Loading space according to one of the preceding claims, **characterized in that**
- the false floor (26) has lateral recesses which are matched in terms of their dimensions to the size of the wheel guards (48), so that
- the false floor (26) is vertically adjustable at least in such a way that it can be lowered into the loading region between the wheel guards (48).

14. Loading space according to Claim 13, **characterized in that**
- the false floor (26) can be lowered as far as the lower loading floor (34).

15. Loading space according to Claim 13 or 14, **characterized in that**
- the recesses (80, 82) can be covered.

16. Loading space according to Claim 14, **characterized in that**
- the recesses (80, 82) can be closed by means of floor components (84) which can be screwed onto the false floor (26).

## Revendications

1. Espace de chargement d'un véhicule,
- avec un plancher intermédiaire (26) présent à l'intérieur de l'espace de chargement (10),
- avec un plancher de chargement inférieur (34) qui est situé entre des passages de roues (48) latéraux,
**caractérisé en ce que**
- un dispositif de levage (44, 46) pour l'espace de chargement (10) est présent pour relever et abaisser celui-ci (10).

2. Espace de chargement selon la revendication 1, **caractérisé en ce que**
- l'espace de chargement (10) peut être relevé sur environ un mètre.

3. Espace de chargement selon la revendication 1 ou 2, **caractérisé en ce que**
- il peut être réalisé sous forme de semi-remorque (10) ou sous forme d'une partie d'un semi-remorque.

4. Espace de chargement selon l'une quelconque des revendications précédentes, **caractérisé en ce que**
- comme dispositif de levage, deux vérins (44) respectivement (46) sont présents dans chacune de la zone avant et de la zone arrière.

5. Espace de chargement selon la revendication 4, **caractérisé en ce que**
- les vérins (44, 46) peuvent être déployés en prenant appui sur la surface de contact (24) du véhicule automobile.

6. Espace de chargement selon la revendication 4 ou 5, **caractérisé en ce que**
- les vérins avant (44) sont présents dans la zone du col de la remorque (12) du semi-remorque (10) et les vérins arrière (46) sont présents dans les deux passages de roues latéraux (48) du semi-remorque (10).

7. Espace de chargement selon l'une quelconque des revendications précédentes, **caractérisé en ce que**
- une plate-forme à bascule inférieure (42) qui peut être amenée dans le prolongement du plancher de chargement (34) est fixée à ce plancher de chargement (34),
- une plate-forme à bascule supérieure (40) est fixée au plancher intermédiaire (26).

8. Espace de chargement selon la revendication 7, **caractérisé en ce que**
- la plate-forme à bascule supérieure (40) peut être amenée en position de prolongement du plancher intermédiaire (26), position dans laquelle elle peut être maintenue grâce au soutien de la plate-forme à bascule inférieure (42).

9. Espace de chargement selon la revendication 7 ou 8, **caractérisé en ce que**
- les deux plates-formes à bascule (40, 42) sont fixées au plancher de chargement inférieur (34) respectivement au plancher intermédiaire (26) tout en pouvant chacune basculer vers le haut,
- les deux plates-formes à bascule (40, 42) en position relevée sécurisent chacune la partie de l'espace de chargement (30) sur le plancher de chargement inférieur (34) respectivement la partie de l'espace de chargement (28) sur le plancher intermédiaire (26).

10. Espace de chargement selon l'une quelconque des revendications précédentes, **caractérisé en ce que**
- il est réalisé de manière porteuse et résistante à la torsion jusqu'à environ la hauteur du col de la remorque (12), et dans la zone au-dessus du col de la remorque (12), il est équipé d'une construction à bâche qui ne contribue pas à la rigidité du semi-remorque (10).

11. Espace de chargement selon l'une quelconque des revendications précédentes, **caractérisé en ce que**
- les vérins (44, 46) et/ou le plancher intermédiaire (26) peuvent être mis en mouvement de manière hydraulique, pneumatique ou au moyen d'un mécanisme à commande de broches à actionnement motorisé ou manuel.

12. Espace de chargement selon l'une quelconque des revendications précédentes, **caractérisé en ce que**
- le plancher intermédiaire (26) au moins au nombre de un est réglable en hauteur.

13. Espace de chargement selon l'une quelconque des revendications précédentes, **caractérisé en ce que**
- le plancher intermédiaire (26) possède des évidements latéraux, dont la taille est adaptée à la taille des passages de roues (48), de telle sorte que
- le plancher intermédiaire (26) soit réglable en hauteur au moins de manière à ce qu'il puisse être abaissé dans la zone de chargement entre les passages de roues (48).

14. Espace de chargement selon la revendication 13, **caractérisé en ce que**
- le plancher intermédiaire (26) peut être abaissé jusqu'au plancher de chargement inférieur (34).

15. Espace de chargement selon la revendication 13 ou 14, **caractérisé en ce que**
- les évidements (80, 82) peuvent être recouverts.

16. Espace de chargement selon la revendication 14, **caractérisé en ce que**
- les évidements (80, 82) peuvent être fermés par des parties de plancher (84) qui peuvent être vissées sur le plancher intermédiaire (26).
